# EUROPÄISCHE PATENTSCHRIFT

(11) **EP 1 140 530 B1**
(45) Veröffentlichungstag und Bekanntmachung des Hinweises auf die Patenterteilung: **12.11.2003**
(21) Anmeldenummer: 99962198.0
(22) Anmeldetag: 01.12.1999
(51) Int. Cl.: B60G 21/05

(54) **VERFAHREN ZUR BEFESTIGUNG EINER ACHSE AN DER KAROSSERIE EINES KRAFTFAHRZEUGES UND LAGERBOCKANORDNUNG HIERFÜR**
METHOD FOR FIXING AN AXLE TO THE BODY OF A MOTOR VEHICLE AND SUPPORT ARRANGEMENT THEREFOR
PROCEDE DE FIXATION D'UN ESSIEU SUR LA CARROSSERIE D'UN VEHICULE ET ARRANGEMENT DE PALIER A CET EFFET

(30) Priorität: 21.12.1998 DE 19858991
(43) Veröffentlichungstag der Anmeldung: 10.10.2001
(73) Patentinhaber: Volkswagen Aktiengesellschaft, 38436 Wolfsburg (DE)
(72) Erfinder: LANGE, Wolfgang, D-38448 Wolfsburg (DE)
(86) Internationale Anmeldenummer: EP9909385
(87) Internationale Veröffentlichungsnummer: WO00037271

(56) Entgegenhaltungen:
- EP-A- 0 352 449
- WO-A-97/12773
- DE-A- 19 752 347
- FR-A- 2 564 785

## Beschreibung

Die vorliegende Erfindung betrifft ein Verfahren zur Befestigung einer Achse an der Karosserie eines Kraftfahrzeuges mittels zur Längsrichtung des Kraftfahrzeuges schräg angeordneter Lagerböcke nach dem Anspruch 1 und eine Lagerbockanordnung für eine Karosserie nach dem Anspruch 8.

Bei der vorstehend genannten Achse handelt es sich insbesondere um eine Verbundienker-Hinterachse, wie sie beispielsweise aus der DE-A-197 52 347 bekannt ist. Diese weist einen Querträger auf, der zwei Längsträger verbindet, an denen jeweils ein Radträger zur Aufnahme eines Rades vorgesehen ist.

An einem Ende des jeweiligen Längsträgers ist dabei ein Lager vorgesehen, mit dem der Längsträger am Unterbau der Karosserie des Kraftfahrzeugs in einem Lagerbock festgelegt werden kann, so daß über die Festlegung der beiden Lager der Längsträger die Achse an der Karosserie festgelegt werden kann. Solche Lagerböcke werden dabei zur Aufnahme der Lager der Längsträger an der Karosserie in einem bestimmten Winkel zur Längsrichtung des Kraftfahrzeuges schräg gestellt, um das Eigenlenkverhalten der Achse positiv zu beeinflussen, also beispielsweise einem Übersteuern des Kraftfahrzeugs bei der Kurvenfahrt entgegenzuwirken.

Bisher bekannte Lagerböcke werden dabei als geschraubte Lagerböcke ausgeführt, d. h. als solche Lagerböcke, die an der Lageraufnahme an der Karosserie über eine Schraubenverbindung festgelegt werden. Die lösbare Schraubenverbindung hat dabei die Aufgabe, eine bestimmte Einstellbarkeit der Achse über die Lagerböcke zu ermöglichen, so daß beispielsweise eine Schrägstellung der Achse vermieden werden kann.

Wenn nun bei der Montage des Kraftfahrzeugs der Lagerbock an der Karosserie befestigt wird, so sind beispielsweise vier Schrauben pro Lagerbock notwendig, um den Lagerbock an der Unterseite der Karosserie festzulegen. Da dafür gesorgt werden muß, daß die Achse nicht einer Schrägstellung unterliegt, muß die Achse an dem an der Karosserie bereits festgelegten Lagerbock bereits angebracht sein, wenn die Ausrichtung der Achse über eine Einstellung der Lagerböcke erfolgt. In diesem Zustand hängt die Achse vom Fahrzeugboden nach unten, wobei aber gleichzeitig die Schrauben zur Einstellung noch zugänglich sein müssen. Dies führt dazu, daß der geschraubte Lagerbock eine solche Größe besitzt, daß alle Schrauben trotz der bereits montierten Achse noch zugänglich sind. Da im Bereich des Fahrzeugbodens aber viele technische Einrichtungen angebracht werden müssen, wie beispielsweise die Abgasanlage oder der Kraftstoffbehälter, ist eine große Erstreckung der Lagerböcke nicht wünschenswert, da eine solche Erstreckung den Einbauraum für die anderen technischen Einrichtungen verringert.

Der vorliegenden Erfindung liegt daher die Aufgabe zugrunde, ein Verfahren zur Befestigung einer Achse mittels schräg angeordneter Lagerböcke an der Karosserie eines Kraftfahrzeuges zu schaffen, welches einen verzwängungsfreien Einbau der Hinterachse gewährleistet und eine Vorschädigung des Lagers verhindert sowie die Verwendung kleiner Lagerböcke zur Lagerung der Achse ermöglicht. Außerdem soll nach der Erfindung ein hierzu geeigneter Lagerbock geschaffen werden.

Die Erfindung weist zur Lösung dieser Aufgabe hinsichtlich des Verfahrens die im Anspruch 1 angegebenen Merkmale auf. Vorteilhafte Ausgestaltungen hiervon sind in den weiteren Ansprüchen beschrieben. Darüber hinaus weist die Erfindung zu Lösung der Aufgabe hinsichtlich des Lagerbockes die im Anspruch 9 angegebenen Merkmale auf, wobei vorteilhafte Ausgestaltungen hiervon in den weiteren Ansprüchen beschrieben sind.

Nach der Erfindung ist ein Verfahren zur Befestigung einer Achse, insbesondere einer Verbundlenker-Hinterachse, an der Karosserie eines Kraftfahrzeuges mittels zur Längsrichtung des Kraftfahrzeuges schräg angeordneter Lagerböcke zur Aufnahme von an der Achse angeordneten Lagern vorgesehen mit folgenden Schritten:

Die Lagerböcke für die Aufnahme der Lager der Achse werden an den quer zur Längsrichtung des Kraftfahrzeuges beabstandeten Lageraufnahmen der Karosserie mittels einer Fügetechnik befestigt. Es werden Bohrungen an den Lagerböcken angebracht für die Aufnahme von Schrauben, mittels denen die Lager der Achse und damit die Achse an den Lagerböcken festgelegt werden können, wobei die Bohrungen einen Abstand zueinander aufweisen, der im wesentlichen dem äußeren Abstand der Lager der Achse entspricht. Die Achse wird an den Lagerböcken mittels einer lösbaren Schraubverbindung der Lager der Achse und der Lagerböcke festgelegt.

Dabei ist es von Vorteil, wenn vor der Befestigung der Achse an der Karosserie des Kraftfahrzeugs der weitgehend in Querrichtung der Achse verlaufende Abstand zwischen den beiden Bohrungen der Lager zur Aufnahme der Schrauben gemessen wird und dieser Abstand dann für die Befestigung der Lagerböcke an der Karosserie als einzuhaltender Abstand herangezogen wird. Dieser Abstand kann an jeder einzubauenden Achse gemessen werden. In der Praxis hat es sich aber als ausreichend herausgestellt, eine oder einige wenige Achsen zu vermessen und den so ermittelten Abstand für die Bohrungen an den Lagerböcken zu verwenden.

Auf diese Weise ist es möglich, gegebenenfalls bei der Herstellung der Achse vorhandene Maßtoleranzen in die auf der Basis dieses gemessenen Abstandes erfolgende Befestigung der Lagerböcke an der Karosserie des Kraftfahrzeuges einzubeziehen. Es bedeutet dies, daß anders als bei einem geschraubten Lagerbock, die Einbringung von Gewindebohrungen an der Unterseite der Karosserie entfallen kann, da die Befestigung der Lagerböcke an der Karosserie auf der Basis und damit unter Berücksichtigung des an der zu montierenden Achse vorhandenen Abstandes der Bohrungen der Lager erfolgt. Daher ist es bei der Fertigung der Karosserie im Rohbau ausreichend, die Lagerböcke so an der Lageraufnahme festzuschweißen, daß der Abstand zwischen den Lagerböcken etwa dem Nennmaß des Abstandes der Lager der Hinterachse entspricht, da die Bohrungen an den Lagerböcken dem Abstand der Lager der Hinterachse nach gefertigt werden. Eine nachträgliche Einstellung der Achse relativ zur Karosserie entfällt somit.

Es ist nach dem Verfahren vorgesehen, daß der Abstand der Lager der Achse mittels einer Bohrschablone an die Lagerböcke übertragen wird. Es bedeutet dies mit anderen Worten, daß der gemessene Abstand der Lager auf eine Bohrschablone übertragen wird und mit dieser dann auf die Lagerböcke übertragen wird, so daß die Bohrungen der Lagerböcke zur Aufnahme der Befestigungsschrauben der Lager an den Lagerböcken in einem solchen Abstand zueinander erfolgen, der weitgehend dem an der Achse vorher gemessenen Abstand entspricht, so daß eine Maßhaltigkeit erreicht werden kann, die in einem engen Toleranzfeld liegt und das Toleranzfeld der gefertigten Achsen berücksichtigt. Es ist aber ebenfalls vorteilhaft, den Abstand der Lager der Achse als Datensatz in eine geeignete Bohrvorrichtung einzugeben und die Bohrungen aufgrund dieser Daten in die beiden Lagerböcke einzubringen.

Es ist dabei nach der Erfindung vorgesehen, daß die Lagerböcke an der Karosserie mittels einer Schweißverbindung festgelegt werden. Die Schweißverbindung ermöglicht eine Krafteinleitung von der Achse in die Karosserie über kleine Anbindungsflächen. Daher können auch kleine Lagerböcke zum Einsatz kommen, denn nach dem Verfahren gemäß der Erfindung müssen keine Flächen an den Lagerböcken mehr vorgesehen seien, die zur Einstellung der Achse benötigt werden. Im Gegensatz nämlich zu den bekannten Verfahren zur Befestigung der Lagerböcke entfällt nach dem erfindungsgemäßen Verfahren die Notwendigkeit einer nachträglichen Einstellung der Achse nach ihrer Montage an der Karosserie.

Es ist dabei nach dem Verfahren vorgesehen, daß die Lagerböcke zur Längsrichtung des Kraftfahrzeuges in einem Winkel von etwa 20 bis 30 Grad und insbesondere etwa 25 Grad schräg gestellt festgelegt werden. Diese Geometrie ermöglicht ein günstiges Eigenlenkverhalten der an der Karosserie festgelegten Hinterachse.

Nach einer Ausbildung des Verfahrens ist dabei vorgesehen, daß ein gemessener Abstand der Lager der Achse um ein vorbestimmtes Toleranzmaß ergänzt auf die Lagerböcke übertragen wird derart, daß die an den Lagerböcken angebrachten Bohrungen zur Aufnahme von Befestigungsmitteln für die Festlegung der Achse an der Karosserie einen Abstand zueinander aufweisen, der dem um das Toleranzmaß ergänzten Abstand entspricht. Hierdurch wird erreicht, daß die an den Lagerböcken anzubringenden Bohrungen hinsichtlich ihres Abstandes zueinander in einem Toleranzfeld liegen dürfen, welches ein kostengünstiges Anbringen der Bohrungen der Lagerböcke ermöglicht, ohne durch die sich hieraus ergebenden Toleranzen der Lage der Achse relativ zum Fahrzeug das Fahrverhalten des Kraftfahrzeuges negativ zu beeinflussen.

Für eine exakte Position der Bohrungen ist es von Vorteil, wenn die Karosserie im Bereich der Lagerböcke in Fahrzeuglängsrichtung abgetastet wird, bis der vorgegebene Abstand A für die in den Lagerböcken auszuführenden Bohrungen erreicht ist.

Nach der Erfindung ist auch ein Lagerbock zur Anordnung an der Karosserie eines Kraftfahrzeuges für die Aufnahme einer Achse an der Karosserie vorgesehen mit Seitenwangen zur insbesondere über eine Schraube lösbaren Aufnahme von Lagern der Achse, wobei der an der Karosserie festgelegte Lagerbock in einem Winkel zur Längsrichtung der Kraftfahrzeuges von etwa 20 bis 30 Grad und insbesondere etwa 25 Grad angeordnet ist. Die Befestigung des Lagerbockes an der Karosserie erfolgt dabei mittels einer Fügetechnik und zwar nach einer bevorzugten Ausführungsform mittels einer Schweißverbindung zwischen den Seitenwangen und der an der Karosserie vorgesehenen Lageraufnahme.

Die Erfindung wird im folgenden anhand der Zeichnung näher erläutert. Diese zeigt in:
- Fig. 1: eine Ansicht von oben auf einen bekannten Lagerbock mit einer daran angeordneten ausschnittsweise dargestellten Hinterachse;
- Fig. 2: eine Ansicht von oben auf einen Teil der Hinterachse, die über Lagerböcke an Trägern der Karosserie festgelegt wird;
- Fig. 3: eine Schnittdarstellung eines an einem Lagerbock nach der Erfindung angeordneten Lagers der Hinterachse; und
- Fig. 4: eine schematische Darstellung der Anordnung der Lagerböcke nach dem erfindungsgemäßen Verfahren.

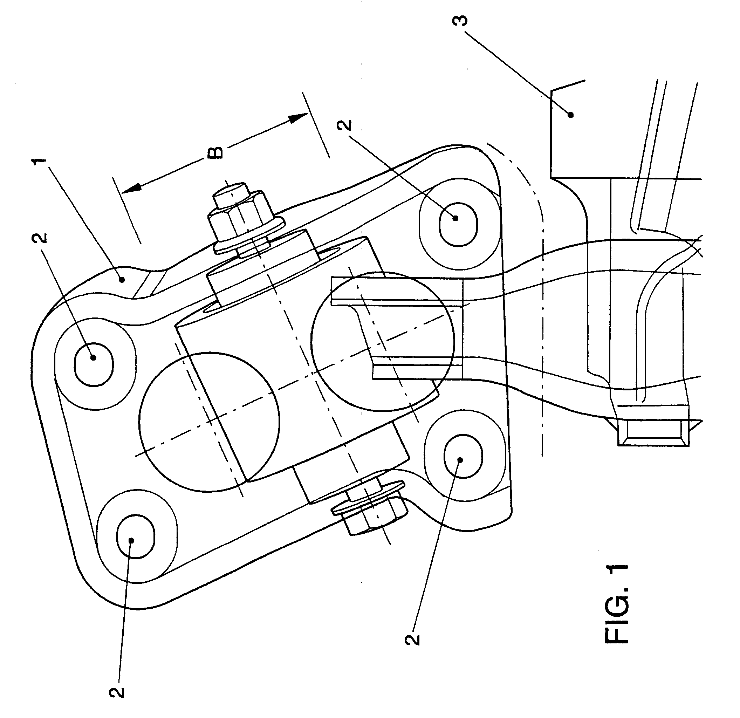

Fig. 1 der Zeichnung zeigt einen bekannten Lagerbock 1, der über eine Schraubenverbindung an einem Längsträger eines Kraftfahrzeugs festgelegt werden kann. Wie leicht ersichtlich ist, besitzt der bekannte Lagerbock 1 vier Schraubenbohrungen 2, in die zur Festlegung des Lagerbockes 1 am Längsträger Gewindeschrauben eingesetzt werden können, wobei die Schraubenbohrungen 2 eine leichte ovale Ausbildung besitzen, damit der Lagerbock 1 zur Einstellung der Hinterachse 3 verschoben werden kann.

Die Anordnung der Schraubenbohrungen 2 des bekannten Lagerbockes 1 ist dabei so gewählt, daß alle Gewindeschrauben für die Montage und die Einstellung des Lagerbockes 1 zugänglich sind. Der bekannte Lagerbock 1 besitzt daher eine großflächige Erstreckung, so daß der am Längsträger des Kraftfahrzeuges und damit am Unterbau anzuordnende Lagerbock 1 einen entsprechend großen Einbauraum benötigt.

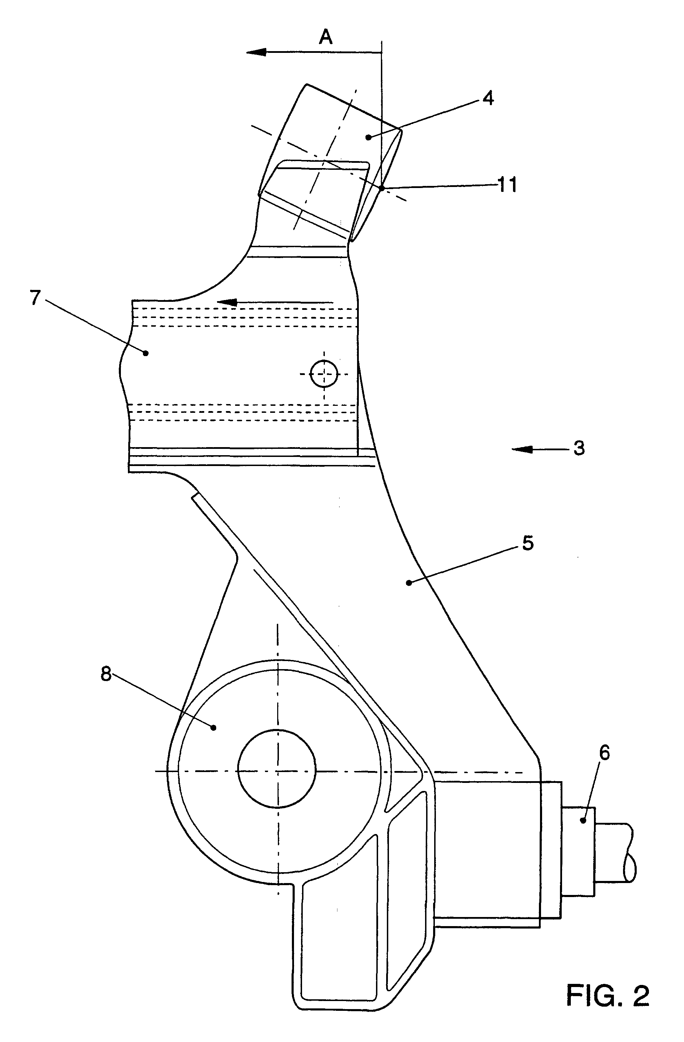

Fig. 2 der Zeichnung zeigt einen Teil einer Verbundlenker-Hinterachse 3 mit einem schräg gestellten Lager 4, welches mit einem Lagerbock am Träger der Karosserie festgelegt werden kann. Die Hinterachse 3 besitzt einen Längslenker, der im folgenden auch als Längsträger 5 bezeichnet wird, an dem ein Radträger 6 befestigt ist und einen Querträger 7, der an dem Längsträger 5 der Hinterachse 3 beispielsweise über eine Schweißverbindung oder eine Klebeverbindung oder dergleichen festgelegt werden kann. Eine am Längsträger 5 vorgesehene Aufnahme 8 dient zur Aufnahme einer Feder und eines Dämpferelementes.

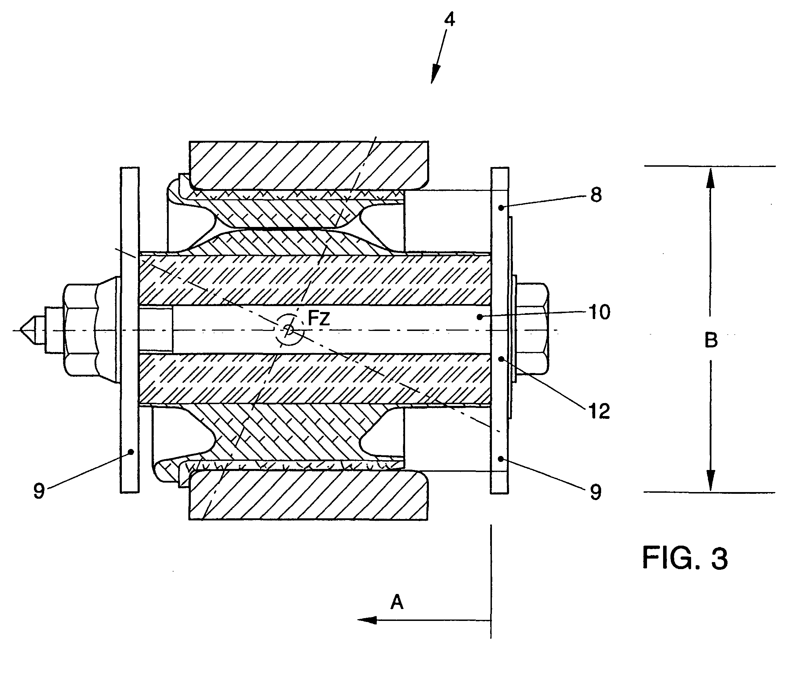

In Fig. 3 der Zeichnung ist nun ein Lagerbock 8 nach der Erfindung dargestellt, der über eine Schweißverbindung an der Karosserie des Kraftfahrzeuges festgelegt werden kann. Zur Befestigung des Lagerbockes 8 ist dabei beispielsweise ein Punktschweißvorgang möglich. Wie es sich leicht anhand eines Vergleichs des bekannten Lagerbockes 1 nach Fig. 1 und des Lagerbockes 8 nach der Erfindung ergibt, besitzt der erfindungsgemäßen Lagerbock 8 eine deutlich geringere flächige Erstreckung als der bekannte Lagerbock 1. Der Lagerbock 8 weist dabei Seitenwangen 9 auf, über die er an einem zur Längsrichtung des Kraftfahrzeuges schräg gestellten Längsträger am Unterboden der Karosserie festgeschweißt werden kann.

Zur Verdeutlichung des Größenunterschiedes zwischen dem bekannten Lagerbock 1 und dem erfindungsgemäßen Lagerbock 8 wird auf Fig. 3 und Fig. 1 verwiesen, wobei die Breite des Lagerbockes 8 nach der Erfindung in Fig. 3 mit der Abmessung B bezeichnet worden ist, die ebenfalls in Fig. 1 eingetragen worden ist, so daß es ohne weiteres ersichtlich ist, daß der erfindungsgemäßen Lagerbock 8 deutlich kleiner ist als der bekannte Lagerbock 1, da die Anbindungsflächen für die Aufnahme der Schraubenbohrungen 2 nicht mehr benötigt werden.

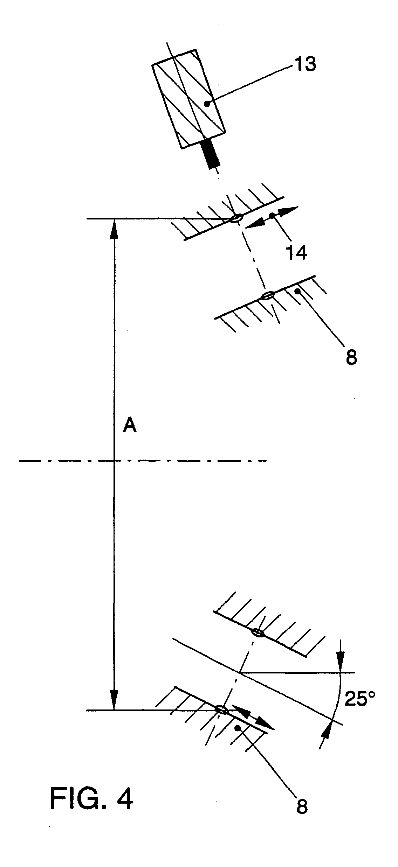

Fig. 4 der Zeichnung zeigt nun eine Darstellung zur Verdeutlichung des erfindungsgemäßen Verfahrens zur Befestigung der Hinterachse 3 an der Karosserie.

Es wird davon ausgegangen, daß eine vorgefertigte Hinterachse 3 an der Karosserie des Kraftfahrzeugs festgelegt werden muß. Zu diesem Zweck wird vor der Montage von Hinterachsen 3 an Karosserien entweder bei jeder Hinterachse oder bei einer einzigen oder einer geringen Anzahl von Hinterachsen der Abstand zwischen den Bohrungen 10 (Fig. 3) der beiden Lager 4 der Hinterachse 3 gemessen.

Zur Verdeutlichung wird auch auf Fig. 2 und 3 Bezug genommen, die mit Pfeil A den gemessenen Abstand zwischen den beiden Lagern 4 der Hinterachse 3 zeigen. Es bedeutet dies mit anderen Worten, daß der Abstand zwischen den Lageraußenseiten 11 der beiden Lager 4 gemessen wird. In diesem Zusammenhang ist zu erwähnen, daß der in Fig. 2 dargestellten rechten Hälfte der Hinterachse 3 selbstverständlich eine korrespondierend ausgebildete linke Hälfte zugeordnet ist, die sich über eine Verbindung des Längsträgers 5 der linken Hälfte der Hinterachse mit dem Querträger 7 ergibt. Auch die linke Hälfte der Hinterachse 3 besitzt dabei ein schräg gestelltes Lager 4, so daß der Abstand A zwischen den beiden zum jeweiligen Radträger 6 hin gerichteten Außenseiten 11 der Lager 4 gemessen wird.

Dieser gemessene Abstand A kann in eine Bohrschablone übertragen werden. Die beiden Lagerböcke 8 werden an der Karosserie des Kraftfahrzeugs z.B. über eine Schweißverbindung in einem zur Längsrichtung des Kraftfahrzeuges schrägen Winkel festgelegt. Mittels der Bohrschablone wird der Abstand A auf die beiden festgeschweißten Lagerböcke 8 übertragen und über eine Bohrvorrichtung 13 die Bohrungen 12 in den beiden Lagerböcken 8 ausgeführt. Zur Einstellung des Abstandes A zwischen den beiden Lagerböcken 8 wird die Bohrschablone an den Lagerböcken 8 in deren Längsrichtung entlang bewegt, wie sich dies anhand des mit dem Bezugszeichen 14 versehenen Pfeiles (Fig. 4) ohne weiteres ergibt. Die Lagerböcke 8 nehmen dabei zur Längsrichtung des Kraftfahrzeuges einen Winkel von etwa 25 Grad ein, wie dies anhand von Fig. 4 ersichtlich ist.

Es ist aber ebenfalls möglich, den gemessenen Abstand A als Datensatz in eine geeignete Bohrvorrichtung 13 einzugeben und die Bohrungen 12 aufgrund dieser Daten in die beiden Lagerböcke 8 einzubringen. Dabei wird die Karosserie im Bereich der Lagerböcke 8 in Fahrzeuglängsrichtung abgetastet, bis der vorgegebene Abstand A für die in den Lagerböcken 8 auszuführenden Bohrungen 12 erreicht ist.

Als Höhenanschlag kann eine dazu geeignete Fläche genutzt werden. Eine zusätzliche Aufnahmebohrung hat eine definierte Anordnung gegenüber der Bohrung des Hinterachslagers und gewährleistet so eine exakte Positionierung der Hinterachse 3.

Das erfindungsgemäße Verfahren ermöglicht die Verwendung von geschweißten Lagerböcken 8 anstelle von geschraubten Lagerböcken und aufgrund der Messung des Abstandes der Bohrungen der Lager 4 eine Montage der Hinterachse 3 an der Karosserie des Kraftfahrzeuges, ohne daß die montierte Hinterachse 3 nach der Befestigung an den Lagerböcken 8 nachträglich eingestellt oder justiert werden muß oder daß Verzwängungen auftreten. Die verglichen mit den bekannten geschraubten Lagerböcken 1 deutlich kleineren erfindungsgemäßen Lagerböcke 8 schaffen am Unterboden des Kraftfahrzeuges Bauraum, der daher für andere technische Bauteile, wie beispielsweise die Abgasanlage oder den Kraftstoffbehälter des Kraftfahrzeuges genutzt werden kann, so daß hierdurch beispielsweise ein größerer Kraftstoffbehälter zum Einsatz kommen kann.

Hinsichtlich vorstehend im einzelnen nicht näher erläuterter Merkmale der Erfindung wird im übrigen ausdrücklich auf die Ansprüche und die Zeichnung verwiesen.

### BEZUGSZEICHENLISTE

- 1: Lagerbock
- 2: Schraubenbohrung
- 3: Hinterachse
- 4: Lager
- 5: Längsträger
- 6: Radträger
- 7: Querträger
- 8: Lagerbock
- 9: Seitenwangen
- 10: Bohrung
- 11: Außenseiten
- 12: Bohrung
- 13: Bohrvorrichtung
- 14: Pfeil

## Patentansprüche

1. Verfahren zur Befestigung einer Achse (3) an der Karosserie eines Kraftfahrzeuges mittels zur Längsrichtung des Kraftfahrzeuges schräg angeordneter Lagerböcke (8) zur Aufnahme von an der Achse (3) angeordneten Lagern (4) mit den aufeinander folgenden Schriften:
- Anbringen der Lagerböcke (8) an quer zur Längsrichtung des Kraftfahrzeuges beabstandeten Lageraufnahmen der Karosserie mittels Schweißen;
- Anbringen von Bohrungen (12) an den Lagerböcken (8) mit einem Abstand zueinander, der im wesentlichen dem Abstand (A) der Lager (4) der Achse (3) entspricht;
- Festlegen der Achse (3) an den Lagerböcken (8) mittels einer lösbaren Verbindung der Lager (4) der Achse (3) und der Lagerböcke (8).

2. Verfahren nach Anspruch 1, **dadurch gekennzeichnet, daß** der Abstand (A) der Lager (4) der Achse (3) vor ihrer Befestigung an der Karosserie gemessen wird.

3. Verfahren nach Anspruch 1 oder 2, **dadurch gekennzeichnet, daß** der Abstand (A) der Lager (4) der Achse (3) mittels einer Bohrschablone an die Lagerböcke (8) übertragen wird.

4. Verfahren nach Anspruch 1 oder 2, **dadurch gekennzeichnet, daß** der Abstand (A) der Lager (4) der Achse (3) als Datensatz in eine geeignete Bohrvorrichtung (13) eingegeben und die Bohrungen (12) aufgrund dieser Daten in die beiden Lagerböcke (8) eingebracht werden.

5. Verfahren nach einem der Ansprüche 1 bis 4, **dadurch gekennzeichnet, daß** die Lagerböcke (8) zur Längsrichtung des Kraftfahrzeuges in einem Winkel von etwa 20 bis 30 Grad und insbesondere etwa 25 Grad schräg gestellt festgelegt werden.

6. Verfahren nach einem der Ansprüche 1 bis 5, **dadurch gekennzeichnet, daß** ein gemessener Abstand (A) der Lager (4) der Achse (3) um ein vorbestimmtes Toleranzmaß ergänzt auf die Lagerböcke (8) übertragen wird derart, daß die an den Lagerböcken (8) angebrachten Bohrungen (12) zur Aufnahme von Befestigungsmitteln für die Festlegung der Achse (3) an der Karosserie einen Abstand zueinander aufweisen, der dem um das Toleranzmaß ergänzten Abstand entspricht.

7. Verfahren nach einem der Ansprüche 1 bis 6, **dadurch gekennzeichnet, daß** die Karosserie im Bereich der Lagerböcke (8) in Fahrzeuglängsrichtung abgetastet wird, bis der vorgegebene Abstand (A) für die in den Lagerböcken (8) auszuführenden Bohrungen (12) erreicht ist.

8. Lagerbockanordnung für eine Karosserie eines Kraftfahrzeuges zur Aufnahme einer Achse (3) an der Karosserie, bei der Lagerböcke (8) an Lageraufnahmen der Karosserie befestigt sind und jeweils ein Lager (4) der Achse (3) aufnehmen, bei der jeder Lagerbock einander gegenüberliegende Seitenwangen (9) ausbildet, zwischen denen ein Lager (4) der Achse (3) lösbar befestigt ist, und bei der die Seitenwangen (9) zur Längsrichtung des Kraftfahrzeuges unter einem Winkel von etwa 20 bis 30 Grad und insbesondere etwa 25 Grad angeordnet sind, **dadurch gekennzeichnet, daß** die Lagerböcke (8) an der Karosserie mittels Schweißverbindungen zwischen den Seitenwangen (9) und der Lageraufnahme festgelegt sind.

## Claims

1. Method for fastening an axle (3) to the body of a motor vehicle by means of bearing blocks (8) arranged obliquely to the longitudinal direction of the motor vehicle and intended for receiving bearings (4) arranged on the axle (3), having the successive steps:
- mounting of the bearing blocks (8) by means of welding on bearing receptacles of the body which are spaced from one another transversely to the longitudinal direction of the motor vehicle;
- making bores (12) on the bearing blocks (8) at a distance from one another which corresponds essentially to the distance (A) between the bearings (4) of the axle (3);
- securing the axle (3) to the bearing blocks (8) by means of a releasable connection of the bearings (4) of the axle (3) and of the bearing blocks (8).

2. Method according to Claim 1, **characterized in that** the distance (A) between the bearings (4) of the axle (3) is measured before it is fastened to the body.

3. Method according to Claim 1 or 2, **characterized in that** the distance (A) between the bearings (4) of the axle (3) is transferred to the bearing blocks (8) by means of a drill template.

4. Method according to Claim 1 or 2, **characterized in that** the distance (A) between the bearings (4) of the axle (3) is entered as a data record into a suitable drilling appliance (13), and the bores (12) are introduced into the two bearing blocks (8) on the basis of these data.

5. Method according to one of Claims 1 to 4, **characterized in that** the bearing blocks (8) are secured, set obliquely at an angle of about 20 to 30 degrees and, in particular, about 25 degrees to the longitudinal direction of the motor vehicle.

6. Method according to one of Claims 1 to 5, **characterized in that** a measured distance (A) between the bearings (4) of the axle (3) is transferred, supplemented by a predetermined tolerance dimension, to the bearing blocks (8), in such a way that the bores (12) made on the bearing blocks (8) for receiving fastening means for securing the axle (3) to the body are at a distance from one another which corresponds to the distance supplemented by the tolerance dimension.

7. Method according to one of Claims 1 to 6, **characterized in that** the body is sensed in the region of the bearing blocks (8) in the vehicle longitudinal direction, until the predetermined distance (A) for the bores (12) to be made in the bearing blocks (8) is reached.

8. Bearing block arrangement for a body of a motor vehicle for receiving an axle (3) on the body, in which bearing blocks (8) are fastened to bearing receptacles of the body and in each case receive a bearing (4) of the axle (3), in which each bearing block forms side cheeks (9) which are located opposite one another and between which a bearing (4) of the axle (3) is fastened releasably, and in which the side cheeks (9) are arranged at an angle of about 20 to 30 degrees and, in particular, about 25 degrees to the longitudinal direction of the motor vehicle, **characterized in that** the bearing blocks (8) are secured to the body by means of welded joints between the side cheeks (9) and the bearing receptacle.

## Revendications

1. Procédé de fixation d'un essieu (3) sur la carrosserie d'un véhicule automobile au moyen de supports de paliers (8) disposés obliquement par rapport à la direction longitudinale du véhicule automobile, destinés à recevoir des paliers (4) disposés sur l'essieu (3), comprenant les étapes successives suivantes :
- fixation par soudage des supports de paliers (8) sur des logements de palier de la carrosserie espacés transversalement par rapport à la direction longitudinale du véhicule automobile ;
- création d'alésages (12) espacés les uns des autres sur les supports de paliers (8) d'une distance qui correspond essentiellement à l'écartement (A) des paliers (4) de l'essieu (3) ;
- fixation de l'essieu (3) sur les supports de paliers (8) au moyen d'une liaison desserrable des paliers (4) de l'essieu (3) et des supports de paliers (8).

2. Procédé selon la revendication 1, **caractérisé en ce que** l'écartement (A) des paliers (4) de l'essieu (3) est mesuré avant sa fixation sur la carrosserie.

3. Procédé selon la revendication 1 ou 2, **caractérisé en ce que** l'écartement (A) des paliers (4) de l'essieu (3) est reporté au moyen d'un patron d'alésage aux supports de paliers (8).

4. Procédé selon la revendication 1 ou 2, **caractérisé en ce que** l'écartement (A) des paliers (4) de l'essieu (3) est entré sous forme d'ensemble de données dans un dispositif d'alésage approprié (13) et les alésages (12) sont pratiqués sur la base de ces données dans les deux supports de paliers (8).

5. Procédé selon l'une quelconque des revendications 1 à 4, **caractérisé en ce que** les supports de paliers (8) sont fixés en position oblique par rapport à la direction longitudinale du véhicule automobile suivant un angle d'environ 20 à 30 degrés, et en particulier d'environ 25 degrés.

6. Procédé selon l'une quelconque des revendications 1 à 5, **caractérisé en ce qu'**un écartement (A) mesuré des paliers (4) de l'essieu (3), complété d'une dimension de tolérance prédéterminée, est transmis aux supports de paliers (8) de telle sorte que les alésages (12) pratiqués sur les supports de paliers (8), pour recevoir des moyens de fixation pour la fixation de l'essieu (3) sur la carrosserie, présentent les uns par rapport aux autres un écartement qui correspond à l'écartement complété de la dimension de tolérance.

7. Procédé selon l'une quelconque des revendications 1 à 6, **caractérisé en ce que** la carrosserie dans la région des supports de paliers (8) est balayée dans la direction longitudinale du véhicule jusqu'à ce que l'écartement (A) prédéfini pour les alésages (12) à réaliser dans les supports de paliers (8) soit atteint.

8. Agencement de supports de paliers pour une carrosserie d'un véhicule automobile destiné à recevoir un essieu (3) sur la carrosserie, dans lequel des supports de paliers (8) sont fixés sur des logements de palier de la carrosserie et reçoivent chacun un palier (4) de l'essieu (3), dans lequel chaque support de palier constitue des parois latérales opposées (9), entre lesquelles un palier (4) de l'essieu (3) est fixé de manière desserrable, et dans lequel les parois latérales (9) sont disposées par rapport à la direction longitudinale du véhicule automobile suivant un angle d'environ 20 à 30 degrés et en particulier de 25 degrés environ, **caractérisé en ce que** les supports de paliers (8) sont fixés sur la carrosserie au moyen de raccords soudés entre les parois latérales (9) et le logement de palier.
